# EUROPÄISCHE PATENTANMELDUNG

(11) **EP 2 298 536 A2**
(43) Veröffentlichungstag der Anmeldung: **23.03.2011**
(21) Anmeldenummer: 10009403.6
(22) Anmeldetag: 09.09.2010
(51) Int. Cl.: B29C 51/42

(54) **Verpackungsmaschine mit mehreren Heizelementen und das Verfahren**

(30) Priorität: 15.09.2009 DE 102009041563
(71) Anmelder: Multivac Sepp Haggenmüller GmbH & Co. KG, 87787 Wolfertschwenden (DE)
(72) Erfinder: Ehrmann, Elmar, 87730 Bad Grönenbach (DE)
(74) Vertreter: Grünecker, Kinkeldey, Stockmair & Schwanhäusser Anwaltssozietät

(57) **Zusammenfassung**

Die Erfindung bezieht sich auf eine Verpackungsmaschine (1) und ein Verfahren, insbesondere bei einer intermittierenden Tiefziehverpackungsmaschine (1), die wenigstens eine Heizfläche mit mehreren Heizelementen (28) aufweist, die durch eine Steuerung (18) individuell ansteuerbar sind, um eine Folie (8) auf unterschiedliche Temperaturniveaus zu erwärmen. Die Heizelemente (28) sind als Dickschichtheizelemente ausgebildet.

## Beschreibung

Die vorliegende Erfindung bezieht sich auf eine Verpackungsmaschine mit einer Vorrichtung gemäß dem Oberbegriff von Anspruch 1 und auf ein Verfahren nach Anspruch 6 zum individuellen Aufheizen einer zu verformenden Folie.

Aus dem Stand der Technik sind Tiefziehverpackungsmaschinen bekannt, die eine Formstation aufweisen, in der eine Folie mittels einer Heizplatte so erwärmt wird, dass sie anschließend zu einer Mulde im Formwerkzeugunterteil geformt werden kann. Dieser Vorgang hat sehr schnell zu erfolgen, da die Folie einerseits durch die im Allgemeinen kühlere Druckluft, die über die gesamte Fläche vom Formwerkzeugoberteil ausgehend anliegt, abgekühlt wird, und andererseits die Folie während des Formprozesses in oberen Bereichen der seitlichen Wände und im Bereich des Bodens der Formmulde im Formwerkzeugunterteil so erkalten kann, dass sich noch anschließende Verformungen der Folie zu nicht erwünschten bzw. zu dünnen Wandstärken führen, oder eine ausreichende Formbildung im gesamten Bereich der Mulde nicht mehr zulassen, da die Folie unter die notwendige Temperatur für ein plastisches Verformen abgekühlt ist.

Vor allem bei großen Tiefzügen und kleinen Radien im Bereich des Muldenbodens ist die Gefahr groß, dass die Wandstärke der Folie nach dem Verformen zu unterschiedlich ist, und diese Mulden aus Gründen der Qualität nicht verwendet werden dürfen und aussortiert werden müssen.

Um die Folie vor dem Formprozess entsprechend individuell erwärmen zu können, können Zonenheizungen eingesetzt werden, bei denen die Heizplatte entsprechend der Muldenform so hergestellt wurde, dass unterschiedliche Bereiche der Folie unterschiedlich erwärmt werden, um im anschließenden Prozess eine gleichmäßigere Wandstärke der Folie zu erhalten. Diese Ausführung ist konstruktiv sehr aufwendig und äußerst unflexibel, da sie an die Packungsform gebunden ist.

Aus der JP 55095519, US 5280434, DE 102006045327 und GB 1405753 sind Heizeinrichtungen bekannt, bei denen eine Heizfläche eine Vielzahl von Heizelementen aufweist, die einzeln ansteuerbar sind, um unterschiedliche Temperaturen an den einzelnen Heizelementen erzeugen zu können. Die bekannten Ausführungen eignen sich nicht dazu, auch an einem Formstempel oder an Formflächen eines Formwerkzeugunterteils wie Seitenwänden und Bodenfläche angebracht zu werden, um in diesen Bereichen unterschiedliche Temperaturen zu erzeugen und so den Formprozess positiv beeinflussen zu können.

In der noch nicht veröffentlichten Anmeldung DE 102009030508.4 ist eine weitere alternative Technik beschrieben. Dabei wird in einer zu verformenden Folie eine räumlich inhomogene Temperaturverteilung erzeugt, damit die Folie entsprechend den Anforderungen des Formprozesses optimal vorbereitet ist. Dies wird aber bevorzugt durch eine einfache dauerbeheizte Heizplatte und besonderen Eigenschaften der Folie ausgeführt.

Ein weiterer Nachteil des Standes der Technik ist eine dauerbeheizte Heizplatte bei einem gleichzeitig gekühlten Formwerkzeugoberteil. Um die zum Verformen der Folie notwendige Wärmeenergie in die Folie einbringen zu können und gleichzeitig die allgemeinen Prozesszeiten in der Tiefziehverpackungsmaschine für eine hohe Maschinenleistung kurz halten zu können, besitzt die Heizplatte dauerhaft die notwendige Temperatur, die im Moment der Folienzuführung bzw. Foilenerwärmung für eine entsprechende Zeit in der Formstation an die Folie übertragen wird. Diese hohen Temperaturen von über 100°C erfordern eine Kühlung des über der Heizplatte befindlichen Formwerkzeugoberteiles zum Verletzungsschutz des Bedienpersonals vor dem Verbrennen beim Berühren des relativ frei zugänglichen Formwerkzeugoberteils.

Diese hohe Energiespeicherung der Heizplatte hat ebenso Nachteile in der Phase zum Aufwärmen, z.B. nach einem Werkzeugwechsel, und in einer Wartezeit vor einem erneuten Umrüsten im Bereich der Formstation durch das notwendige Abkühlen der Heizplatte.

Aus der DE 102005043026 ist aus dem Bereich von Haushaltsgeräten der Hinweis auf einen möglichen Einsatz von einer Dickschichtheizung zum Aufheizen von Wasser bekannt. Dabei soll die kostengünstige Herstellung und der geringe Platzbedarf einen Vorteil bieten.

Es ist nun Aufgabe der vorliegenden Erfindung, eine Vorrichtung zu schaffen, die geeignet ist, eine Folie individuell mit unterschiedlichen Temperaturniveaus unter Berücksichtigung des hierzu notwenigen Energieverbrauchs für den Formprozess zu erwärmen und die Nachteile des Stands der Technik zu beseitigen.

Diese Aufgabe wird durch die Lehre der Ansprüche 1 oder 6 gelöst, indem eine Heizfläche mit einzeln ansteuerbaren Heizelementen als Dickschichtheizelemente ausgebildet ist.

Unter "Dickschichtheizung"wird im Sinne der Erfindung eine Heizung verstanden, bei der die Heizelemente (ohne Substrat oder Träger) eine Dicke von mindestens 1µm haben. Der Begriff "Heizelement" wird synonym zu "Heizkreis" verwendet.

Die Ausführung der Heizfläche gemäß der vorliegenden Erfindung hat den Vorteil, dass durch den geringen Anteil von Material die Dickschichtheizungen schnell auf die gewünschte Temperatur erwärmbar sind und ebenso schnell wieder auf die Umgebungstemperatur abkühlen können, da quasi keine Wärmespeicherung vorliegt. Dies ermöglicht in Zusammenhang mit einer Steuerung eine zeitlich begrenzte Einschaltdauer der Dickschichtheizelemente, während die Folie erwärmt werden soll, und somit einen geringen Energieverbrauch.

Durch eine gleichmäßige Verteilung von einer Vielzahl von Dickschichtheizungen wird auch eine hohe Flexibilität bezüglich unterschiedlicher Packungsformen erzeugt.

Die Vielzahl von auf der Heizfläche vorzugsweise gleichmäßig bzw. in Matrix-Form verteilten Heizelementen können eine Folie individuell durch die einzelne Ansteuerung der Heizelemente so erwärmen, dass unterschiedliche Bereiche bzw. Flächen der Folie unterschiedlich stark erwärmt werden können. Dies führt zu unterschiedlichen Temperaturniveaus, die passend zu dem darauf folgenden Formprozess erzeugt werden können, um beim bzw. nach dem Formprozess die gewünschten Wandstärken und Verformungen der geformten Mulde zu erhalten.

Vor allem bei Formprozessen mit großen Tiefzügen, kleinen Radien und dünnen Folien stellt die erfindungsgemäße Verpackungsmaschine eine Lösung dar, die gegenüber dem Stand der Technik eine energetisch günstigere Lösung bietet und eine erhöhte Prozesssicherheit und somit Sicherstellung von Qualität der Packungsmulde gewährleistet.

Bei der üblichen Notwendigkeit, verschiedenen Muldenformen auf ein und derselben Tiefziehverpackungsmaschine erzeugen zu können, stellt sich die erfindungsgemäße Heizvorrichtung als kostengünstige Lösung heraus, weil keine aufwendigen und speziell für den Formprozess hergestellten Bauteile bereitgestellt und auch bei einem Produktwechsel umgerüstet werden müssen, sondern weil die individuell erzeugbaren Temperaturniveaus, die für die Folie notwendig sind, in der Steuerung gespeichert und wieder abgerufen werden können. Dies kann zu geringsten Umrüstzeiten führen. Auch Änderungen bei den unterschiedlichen Temperaturniveaus sind über die Steuerung möglich, um sich veränderbaren Randbedingungen im Formprozess anpassen zu können. Diese Randbedingungen könnten beispielsweise kürzere Arbeitstaktzeiten oder schwankende Folienstärken sein.

Die Dickschichttechnik ermöglicht eine Integration von vielen Heizelementen in einer gemeinsamen Schicht, die auf einer Trägerplatte angebracht werden kann und somit als Heizplatte ausgebildet sein kann. Vorzugsweise kann eine solche flächige Anordnung in einem Formwerkzeugoberteil angebracht sein oder als Vorheizung über und/oder unter der Folie vor der Formstation die Folien vorwärmen, falls die in der Formstation zu Verfügung stehende Zeit nicht ausreichend ist.

Es ist denkbar, die Heizelemente einzeln anzubringen und einzeln oder gesammelt mit der Steuerung verbunden auszuführen. An einem der Steuerung zugeordneten Display können die Temperaturniveaus individuell in Abhängigkeit der vorhanden Heizelemente eingegeben, gespeichert und/oder von außerhalb der Verpackungsmaschine vorgegeben und eingespielt werden.

Während des Formprozesses kann es beim ersten Kontakt von der Folie mit einem Stempel oder den Flächen der Formmulde im Formwerkzeugunterteil zu einer zu schnellen Abkühlung der Folie an diesen Teilbereichen kommen. Dies kann zur Folge haben, dass sich die Folie in diesen Teilbereichen nicht mehr genug dehnen kann und eine zu starke Reduzierung der Wandstärke der Folie in den übrigen Bereichen auftritt. Diesem unerwünschten Verhalten beim Formprozess kann mit der erfindungsgemäßen Verpackungsmaschine entgegengewirkt werden, wenn zusätzlich oder alternativ Heizflächen wenigstens teilweise am Stempel oder an der den Wänden und/oder am Boden der Formmulde angebracht sind. Damit kann durch ein gezieltes Temperaturniveau die Folie auch an diesen Teilbereichen verformbar gehalten werden, solange dies für den Formprozess notwendig ist.

Die Ausführung als Dickschichtheizung bietet den Vorteil, durch eine Kühlung im Bereich der Formmulde beispielsweise mittels Kühlwasserkanälen die Heizelemente in kürzester Zeit so abzukühlen, dass die Heizelemente die Temperatur der gekühlten Formmulde bzw. des Formwerkzeugunterteils annehmen und dies somit den Erkaltungsprozess der tiefgezogenen Folie kaum verzögert.

Besonders sinnvoll ist der Einsatz der erfindungsgemäßen Verpackungsmaschine in einer intermittierend arbeitenden Tiefziehverpackungsmaschine, da hier die Zeit für einen Arbeitstakt auch von der Siegelstation bei der Herstellung von Verpackungen unter modifizierter Atmosphäre beeinflusst wird und es hierbei zu einer unerwünschten Verweilzeit der Folie in der Formstation und Heizvorrichtung kommen kann. Durch die während dieser Zeit abgeschalteten Dickschichtheizungen kann die beschriebene Problematik vermieden werden.

Einen weiteren positiven Einfluss hat die erfindungsgemäße Verpackungsmaschine bei der Verwendung und Verarbeitung von Kunststofffolien, die meist vielschichtig sind und somit in ihren Eigenschaften auch für den Formprozess sehr individuell erwärmt werden sollten, um die gewünschten Ergebnisse erhalten zu können.

Der erfindungsgemäße Verfahrensablauf bei einer intermittierend arbeitenden Tiefziehverpackungsmaschine mit wenigstens einer Heizfläche, die eine Vielzahl von vorzugsweise gleichmäßig verteilten Dickschichtheizungen aufweist, wobei eine Steuerung diese Dickschichtheizungen einzeln ansteuern kann, weist vor allem Vorteile beim Erwärmen einer zu verformenden Folie auf unterschiedliche Temperaturniveaus auf.

Zu Beginn eines Arbeitstaktes wird der Formstation der Tiefziehverpackungsmaschine die Folie in Form eines bahnförmigen Materials mittels eines Vorschubsystems über beidseitig angeordnete Klammerketten zugeführt. Anschließend wird die Formstation geschlossen, und es wird eine geschlossene Kammer erzeugt. Die Steuerung kann währenddessen oder auch erst nach dem Schließen der Formstation die Heizelemente, ausgeführt als Dickschichtelemente, ansteuern und aufheizen. Diese Ansteuerung kann entsprechend einem im Speicher der Steuerung abgelegten Programm ausgeführt sein oder durch Eingaben in die Steuerung durch das Bedienpersonal erfolgen.

Um die Wärmeenergie in die Folie einzuleiten, wird die Folie vorzugsweise durch einen Unterdruck im Formwerkzeugoberteil an die Heizelemente herangezogen, so dass sich die Folie gleichmäßig an die Heizelemente anlegt. Die Folie erwärmt sich entsprechend, und es entstehen die gewünschten individuellen Temperaturniveaus innerhalb der Folie.

Die Steuerung schaltet die Heizelemente ab, sobald der Formprozess der Folie beginnt und die Folie in das Formwerkzeugunterteil mittels Druckluft im Formwerkzeugoberteil und/oder Unterdruck im Formwerkzeugunterteil verformt wird.

Der Prozess wird beendet, sobald sich die Folie bis zu einem "stabilen" Temperaturbereich abgekühlt hat, in dem sie nicht mehr verformbar ist..

Anschließend öffnet sich die Formstation, und mit dem Ausbringen der geformten Mulden wird der nächste Bereich der Folie in die Formstation eingebracht.

Aufgrund einer möglichen, durch die Siegelstation verursachten längeren Taktzeit kann es zu Wartezeiten beispielsweise beim Abkühlen der Folie im Formwerkzeugunterteil und/oder dem Öffnen der Formstation kommen.

Im Folgenden wird ein vorteilhaftes Ausführungsbeispiel der Erfindung anhand einer Zeichnung näher erläutert. Im Einzelnen zeigen:
- Figur 1: eine schematische Seitenansicht einer erfindungsgemäßen Verpackungsma- schine in Form einer Tiefziehverpackungsmaschine,
- Figur 2: ein schematischer Vertikalschnitt durch die Formstation mit Vorheizstation der in Figur 1 gezeigten Verpackungsmaschine in geöffneter Stellung,
- Figur 3a: die in Figur 2 gezeigte Formstation in geschlossener Stellung beim beginnen- den Formprozess,
- Figur 3b: die in Figur 2 gezeigte Formstation in geschlossener Stellung während des Formprozesses,
- Figur 3c: die in Figur 2 gezeigte Formstation in geschlossener Stellung bei abgeschlos- senem Formprozess,
- Figur 3d: die in Figur 2 gezeigte Formstation in offener Stellung und bei abgeschlosse- nem Formprozess,
- Figur 4a: eine schematische Draufsicht der Folie, der Heizelemente und der unter- schiedlichen Heizbereiche,
- Figur 4b: eine grafische Darstellung der Temperaturverteilung in der Folie im Schnitt IV - IV in Fig. 4a,
- Figur 5: die in Figur 2 gezeigte Formstation in geschlossener Stellung in einer Variante mit Heizelementen in der Formmulde und
- Figur 6: die in Figur 2 gezeigte Formstation in geschlossener Stellung in einer Variante mit Heizelementen an einem Stempel.

Gleiche Komponenten werden in den Figuren durchgängig mit gleichen Bezugszeichen versehen.

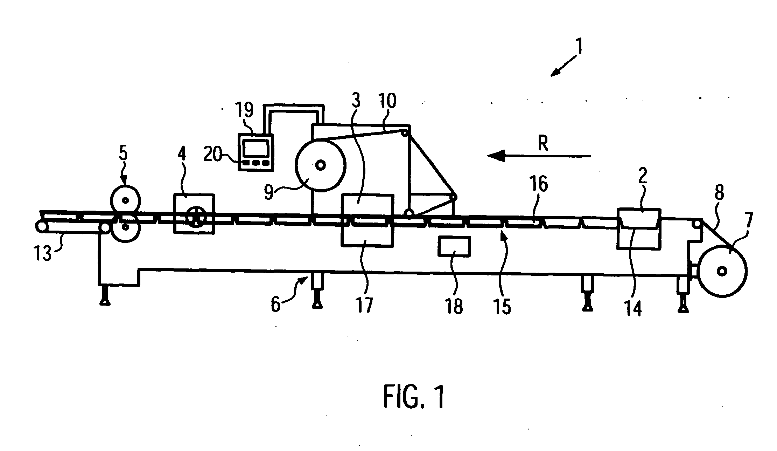

Figur 1 zeigt in schematischer Ansicht eine erfindungsgemäße Verpackungsmaschine 1 in Form einer Tiefziehverpackungsmaschine. Diese Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Arbeitsrichtung R an einem Maschinengestell 6 angeordnet sind. Eingangsseitig befindet sich an dem Maschinengestell 6 eine Zufuhrrolle 7, von der eine Folie 8 abgezogen wird. Im Bereich der Siegelstation 3 ist ein Materialspeicher 9 vorgesehen, von dem eine Deckelfolie 10 abgezogen wird. Ausgangsseitig ist an der Verpackungsmaschine eine Abfuhreinrichtung 13 in Form eines Transportbandes vorgesehen, mit der fertige, vereinzelte Verpackungen abtransportiert werden. Ferner weist die Verpackungsmaschine 1 eine nicht dargestellte Vorschubeinrichtung auf, die Folie 8 ergreift und diese pro Hauptarbeitstakt in der Arbeitsrichtung R weitertransportiert. Die Vorschubeinrichtung kann zum Beispiel durch beidseitig angeordnete Transportketten ausgeführt sein.

In der dargestellten Ausführungsform ist die Formstation 2 als eine Tiefziehstation ausgebildet, bei der in die Folie 8 durch Tiefziehen Mulden 14 geformt werden. Dabei kann die Formstation 2 derart ausgebildet sein, dass in der Richtung senkrecht zur Arbeitsrichtung R mehrere Mulden nebeneinander gebildet werden. In Arbeitsrichtung R hinter der Formstation 2 ist eine Einlegestrecke 15 vorgesehen, in der die in der Folie 8 geformten Mulden 14 mit Produkt 16 befüllt werden.

Die Siegelstation 3 verfügt über eine verschließbare Kammer 17, in der die Atmosphäre in den Mulden 14 vor dem Versiegeln zum Beispiel durch Gasspülen mit einem Austauschgas oder mit einem Gasgemisch ersetzt werden kann.

Die Querschneideeinrichtung 4 ist als Stanze ausgebildet, die die Folie 8 und die Deckelfolie 10 in einer Richtung quer zur Arbeitsrichtung R zwischen benachbarten Mulden 14 durchtrennt. Dabei arbeitet die Querschneideeinrichtung 4 derart, dass die Folie 8 nicht über die gesamte Breite aufgetrennt wird, sondern zumindest in einem Randbereich nicht durchtrennt wird. Dies ermöglicht einen kontrollierten Weitertransport durch die Vorschubeinrichtung.

Die Längsschneideeinrichtung 5 ist in der dargestellten Ausführungsform als eine Messeranordnung ausgebildet, mit der die Folie 8 und die Deckelfolie 10 zwischen benachbarten Mulden 14 und am seitlichen Rand der Folie 8 durchtrennt werden, so dass hinter der Längsschneideeinrichtung 5 vereinzelte Verpackungen vorliegen.

Die Verpackungsmaschine 1 verfügt ferner über eine Steuerung 18. Sie hat die Aufgabe, die in der Verpackungsmaschine 1 ablaufenden Prozesse zu steuern und zu überwachen. Eine Anzeigevorrichtung 19 mit Bedienelementen 20 dient zum Visualisieren bzw. Beeinflussen der Prozessabläufe in der Verpackungsmaschine 1 für bzw. durch einen Bediener.

Die generelle Arbeitsweise der Verpackungsmaschine 1 wird im Folgenden kurz beschrieben.

Die Folie 8 wird von der Zufuhrrolle 7 abgezogen und durch die Vorschubeinrichtung in die Formstation 2 transportiert. In der Formstation 2 werden durch Tiefziehen Mulden 14 in die Folie 8 gebildet. Die Mulden 14 werden zusammen mit dem umgebenden Bereich der Folie 8 in einem Hauptarbeitstakt zu der Einlegestrecke 15 weitertransportiert, in der sie mit Produkt 16 befüllt werden.

Anschließend werden die befüllten Mulden 14 zusammen mit dem sie umgebenden Bereich der Folie 8 in dem Hauptarbeitstakt durch die Vorschubeinrichtung in die Siegelstation 3 weitertransportiert. Die Deckelfolie 10 wird nach einem Ansiegelvorgang an die Folie 8 mit der Vorschubbewegung der Folie 8 weitertransportiert. Dabei wird die Deckelfolie 10 von dem Materialspeicher 9 abgezogen. Durch das Ansiegeln der Deckelfolie 10 auf die Mulden 14 entstehen verschlossene Verpackungen, die in den nachfolgenden Schneidungen 4 und 5 vereinzelt und mittels der Abfuhreinrichtung 13 aus der Verpackungsmaschine heraustransportiert werden.

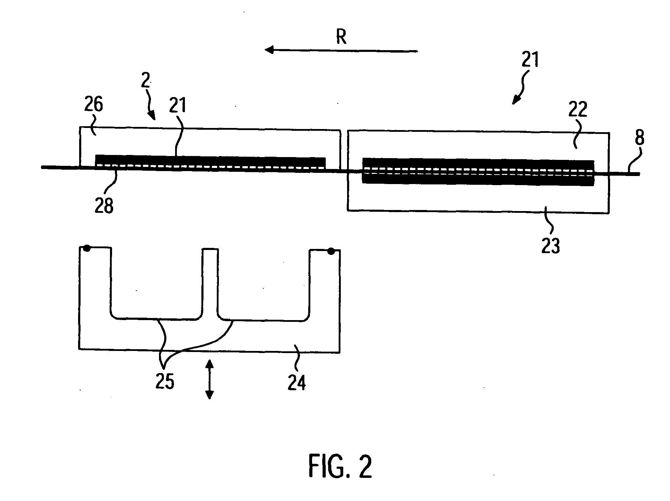

Figur 2 zeigt eine Formstation 2 mit einer vorgeordneten Vorheizstation 21 in einer Variante mit oben angeordneter Vorheizung 22 und zusätzlich unten angeordneter Vorheizung 23. Vor allem bei dicken Folien 8 ist diese Konfiguration sinnvoll, da die Zeitdauer für die Erwärmung der Folie 8 nur in der Formstation 2 so groß ist, dass sich die Zeit eines Arbeitstaktes dadurch unnötig verlängern kann und somit sich somit die Leistung der Verpackungsmaschine 1 in Bezug auf Produktion von Packungen pro Minute verringert kann.

Die Formstation 2 umfasst ein Formwerkzeugunterteil 24 mit Formmulden 25. Das Formwerkzeugunterteil 24 ist über ein nicht dargestelltes Hubwerk auf- und abbewegbar ausgeführt. Weiterhin umfasst die Formstation 2 ein Formwerkzeugoberteil 26, in dem an der Unterseite eine Heizplatte 27 angebracht ist. Auf der Heizplatte 27 sind eine Vielzahl von gleichmäßig verteilten Heizelementen 28, die als Dickschichtheizung ausgeführt sind, angeordnet. Die einzelnen Heizelemente 28 sind über die Steuerung 18 ansteuerbar, und die Visualisierung oder die Anpassungen der individuellen Temperaturniveaus der Heizelemente 28 kann über die Anzeigevorrichtung 19 ausgeführt sein.

Die Erwärmung der Folie 8 kann noch bei geöffneter Formstation 2 erfolgen, während des Schließvorganges oder erst bei geschlossener Formstation 2.

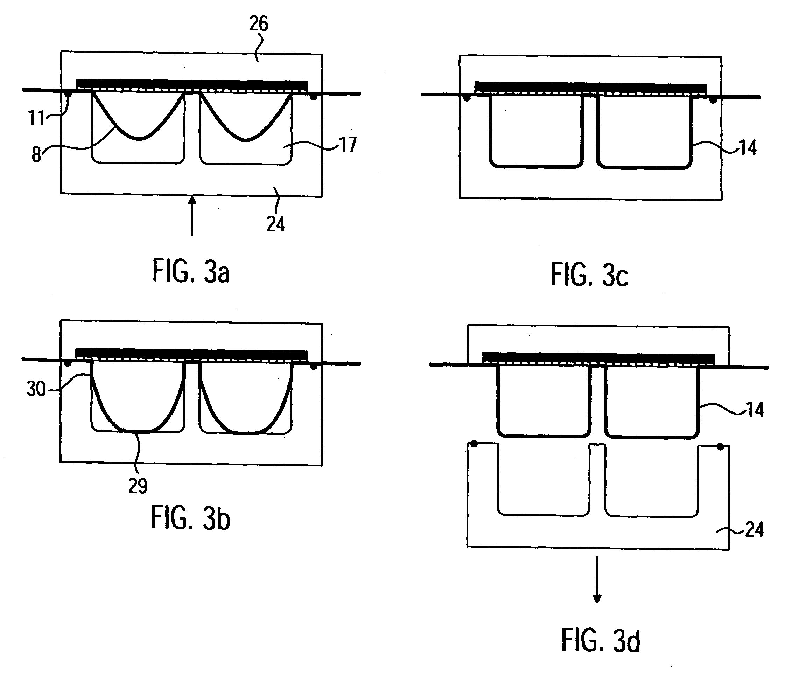

In Figur 3a ist das Formwerkzeugunterteil 24 nach oben verfahren worden und bildet nun eine geschlossene Kammer 17 mit dem Formwerkzeugoberteil 26. Gleichzeitig ist die Folie 8 am Rand mittels einer Dichtung 11 durch das Formwerkzeugunterteil 24 und das Formwerkzeugoberteil 26 ringsum geklemmt und dicht geschlossen. Sobald die Folie 8 individuell mittels der einzelnen Heizelemente 28 auf die gewünschte Temperatur erwärmt wurde, schaltet die Steuerung 18 die Heizelemente 28 ab und es beginnt der Formprozess in Form von Tiefziehen durch Überdruck oberhalb der Folie 8 und/oder Unterdruck unterhalb der Folie 8. Dabei bildet die Folie 8 anfangs eine Art Sack durch den Druckunterschied und die gleichmäßig auf die Folie 8 wirkenden Kräfte.

In Figur 3b hat die Folie 8 den Boden 29 der Formmulde 25 erreicht und liegt auch im oberen Bereich der seitlichen Wände 30 der Formmulde 25 an. Diese Flächen haben eine sehr viel geringere Temperatur als die Folie 8, so dass hier die Folie 8 abkühlt wird. Damit sich die Folie 8 nicht unter die Temperatur für die plastische Verformung in der noch zu verbleibenden Formzeit abkühlt, wurden diese Bereiche 29 und 30 der Folie 8 auf ein höheres Temperaturniveau erwärmt als die übrigen Bereiche.

Im weiteren Verlauf des Formprozesses wird die Folie 8 weiter gedehnt, bis die Folie 8 komplett in der Formmulde 25, wie in Figur 3c gezeigt, anliegt. Nachdem sich die Folie 8 soweit abgekühlt hat, dass die geformte Mulde 14 stabil ist, öffnet sich die Formstation 2 durch das nach unten verfahrende Formwerkzeuguntertell 24, wie in Figur 3d gezeigt.

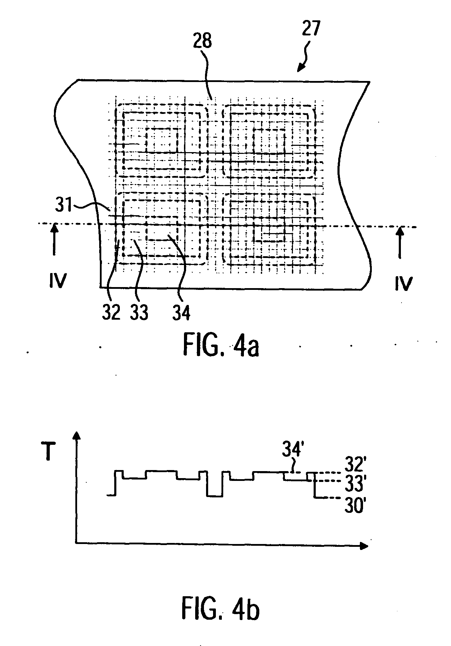

Figur 4a zeigt in der Draufsicht die Heizfläche der Heizplatte 27 mit rasterförmig bzw. Matrixförmig eng anliegenden Heizelementen 28 und vier Bereichen 31 bis 34. Das Diagramm in Figur 4b zeigt vier unterschiedliche Temperaturniveaus 31' bis 34' verteilt über die Heizfläche, die sich durch die unterschiedlichen Temperaturen der Heizelemente 28 in den Bereichen 31 bis 34 ergeben.

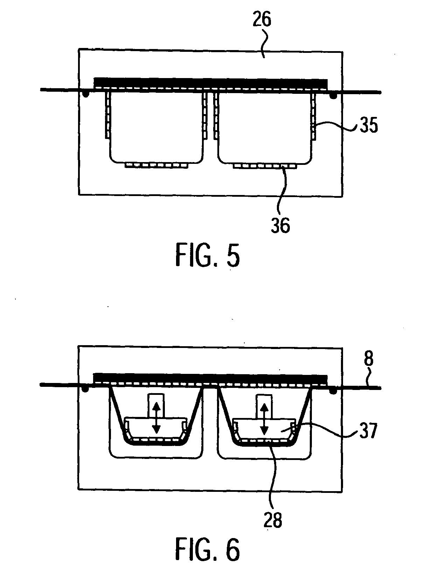

In Figur 5 ist eine Variante der erfindungsgemäßen Verpackungsmaschine 1 gezeigt, bei der zusätzlich zur Heizfläche am Formwerkzeugoberteil 26 weitere Heizflächen 35 und 36 an den Wänden und am Boden der Formmulde 25 angebracht sind.

Als weitere Variante ist in Figur 6 eine Ausführung von Stempelverformung gezeigt. Am Stempel 37 sind an den Flächen, die mit der Folie 8 in Kontakt sind, Heizelemente 28 angebracht, die für individuelle Temperaturniveaus in diesen Bereichen sorgen.

Die Heizflächen der erfindungsgemäßen Verpackungsmaschine sind nicht auf die dargestellten Ausführungen begrenzt, sondern es können weitere Kombinationen oder Bereiche in der Formstation mit Heizelementen ausgeführt sein.

Für eine Regelung von individuellen Temperaturniveaus ist es auch denkbar, bei vielen kleinen Heizelementen 28 nicht alle einzeln, sondern in Gruppen durch die Steuerung 18 zu regeln.

Die Folie 8 kann aus einer Kunststofffolie, einem anderen materialförmigen Material oder einem Materialverbund bestehen.

Die erfindungsgemäße Verpackungsmaschine 1 umfasst auch eine Formstation 2 für eine Deckfolie, um diese vor dem Versiegeln mit der Folie 8 individuell erwärmen und zu verformen zu können.

## Patentansprüche

1. Verpackungsmaschine (1) mit einer Formstation (2), die wenigstens eine Heizfläche mit jeweils mehreren Heizelementen (28) aufweist, die durch eine Steuerung (18) individuell ansteuerbar sind, um unterschiedliche Bereiche einer Folie (8) auf unterschiedliche Temperaturniveaus (31'-34') zu bringen, **dadurch gekennzeichnet, dass** die Heizelemente (28) als Dickschichtheizelemente ausgebildet sind.

2. Verpackungsmaschine nach Anspruch 1, **dadurch gekennzeichnet, dass** die Heizfläche als eine Heizplatte (27), ein Stempel (37) und/oder Flächen (35,36) einer Formmulde (25) ausgeführt ist.

3. Verpackungsmaschine nach einem der vorangehenden Ansprüche, **dadurch gekennzeichnet, dass** alle Heizelemente (28) einer Heizfläche in eine gemeinsame Heizplatte (27) oder Heizmatte integriert sind.

4. Verpackungsmaschine nach einem der vorangehenden Ansprüche, **dadurch gekennzeichnet, dass** zwei einander zugewandte Heizflächen vorgesehen sind, wobei die Heizelemente (28) auf der einen Heizfläche spiegelsymmetrisch zu den Heizelementen (28) auf der anderen Heizfläche angeordnet sind.

5. Verpackungsmaschine nach einem der vorangehenden Ansprüche, **dadurch gekennzeichnet, dass** mehrere Heizflächen vorgesehen sind, die unabhängig voneinander beheizbar sind.

6. Verpackungsmaschine nach einem der vorherigen Ansprüche, **dadurch gekennzeichnet, dass** die Heizfläche während des Formvorgangs der Folie (8) kühlbar ausgeführt ist.

7. Verpackungsmaschine nach einem der vorherigen Ansprüche, **dadurch gekennzeichnet, dass** die Verpackungsmaschine (1) als Tiefziehverpackungsmaschine mit einem intermittierendem Arbeitstakt ausgeführt ist.

8. Verpackungsmaschine nach einem der vorherigen Ansprüche, **dadurch gekennzeichnet, dass** die Folie (8) eine Kunststofffolie ist.

9. Verfahren bei einer intermittierend arbeitenden Tiefziehverpackungsmaschine mit einer Formstation (2), die wenigstens eine Heizfläche mit mehreren Heizelementen (28) als Dickschichtheizung umfasst, wobei die Heizelemente (28) durch eine Steuerung (18) einzeln angesteuert werden, um eine Folie (8) auf unterschiedliche Temperaturniveaus zu erwärmen, wobei ein Arbeitstakt folgende Schritte umfasst:
- Zuführen der Folie (8) in die Formstation (2),
- Schließen der Formstation (2) zur Erzeugung einer dicht geschlossenen Kammer (17),
- Ansteuerung der Heizelemente (28) durch die Steuerung (18) für eine räumlich inhomogene Temperaturverteilung in der Folie (8),
- Anlegen der Folie (8) an die Heizelemente (28),
- Abschalten der Heizelemente (28) nach Erreichen der individuellen Temperaturniveaus (31'-34') in der Folie (8),
- Verformen der Folie (8) in ein Formwerkzeugteil (24),
- Abkühlen der Folie (8) in einen stabilen und nicht mehr plastisch verformbaren Temperaturbereich,
- Öffnen der Formstation (2),
- Ausbringen der verformten Folie (8) aus der Formstation (2).

10. Verfahren nach Anspruch 9, wobei mindestens zwei einander zugewandte Heizflächen vorgesehen sind, auf denen die Heizelemente (28) jeweils spiegelsymmetrisch zueinander angeordnet sind, wobei jeweils zwei einander zugewandte Heizelemente (28) auf den gegenüberliegenden Heizflächen gemeinsam betrieben werden.

11. Verfahren nach einem der Ansprüche 9 oder 10, wobei mehrere Heizflächen vorgesehen sind, von denen zu einem Zeitpunkt lediglich eine zumindest abschnittsweise beheizt wird.
